# EUROPEAN PATENT APPLICATION

(11) **EP 1 724 699 A1**
(43) Date of publication of application: **22.11.2006**
(21) Application number: 05010681.4
(22) Date of filing: 17.05.2005
(51) Int. Cl.: G06F 21/00, G11B 20/00, G06Q 10/00

(54) **Method and system for gradually degrading the quality of digital content in a DRM system**

(71) Applicant: SIEMENS AKTIENGESELLSCHAFT, 80333 München (DE)
(72) Inventor: Theisen, Rolf, 46397 Bocholt (DE)

(57) **Abstract**

A software agent (107) for digital rights management, comprising a unit (106) adapted to manage use rights for a given digital multimedia content (CONT) at a given portable electronic device (101), is characterized in that said software agent (107) is adapted to gradually degrade the quality of the digital multimedia content (CONT) upon reading or otherwise invoking the digital multimedia content (CONT). Also claims for a portable electronic device, a digital rights management system, and for a method for managing use rights for digital multimedia content.

## Description

### Field of the invention

The invention relates to the field of software agents, to portable electronic devices and to systems for digital rights management. Furthermore, the invention relates to a method for managing use rights for digital multimedia content.

### Background art

For digital multimedia content that has been recorded on a data carrier such as a CD or DVD, there are various copy protection techniques. One of such technologies is to intentionally create errors on the CD so that playing back or copying the digital multimedia content is possible only by using suitable devices. The reading of such a CD would then not be possible using a computer CD drive, for example.

A further copy protection technique is based on superimposing water marks to the digital multimedia content. The water marking is invisible for the user and it can be used for identifying the source of pirate copies of the multimedia digital content.

A CD can be protected with a code printed on the original cover. A proprietary playback device is then necessary.

Digital multimedia content, such as audio, video, images or software can be relatively easily copied illegally or forwarded to a third party. The concept of Digital Rights Management DRM refers to protecting the copyright, usually belonging to the author or his/her successor, on digital multimedia content. In practice, a particular objective of DRM is to prohibit unauthorized use and distribution of digital multimedia content.

At the moment there is a large number of digital multimedia content providers on the market. Many of them use proprietary platforms to provide digital multimedia content to users of different portable electronic devices. To an increasing extent the delivery takes place electronically and over the Internet. One particularly well-known digital multimedia content provider is the iTunes of Apple Computers, Inc.

The underlying business model of a digital multimedia content provider can be effected by way of digital rights management. A content provider ensures itself revenue of the sales of digital multimedia content by regulating use rights. The use rights may define the period of validity for using the digital multimedia content, the allowed frequency of the use, or the transferability of the digital multimedia content onto other devices or persons.

Even though measures to circumvent DRM protection have been penalized in most jurisdictions, different computer software that can be used to override the use rights defined by the digital rights management in order to enable an unlimited access to digital multimedia contents has been observed to enter the market regularly.

At the time of writing, standardization of different copy protection methods for mobile terminals, especially for 3G mobile terminals, is still ongoing at the Open Mobile Alliance OMA. In their current plans, digital multimedia content and use rights are going to be separated from each other. The digital multimedia content will be transmitted to a mobile terminal encrypted, and on the terminal there will be an unambiguously identifiable, device-specific DRM agent that can use the digital multimedia content if the use rights allow. A more detailed description can at the time of writing (May 17, 2005) be found under
http://www.openmobilealliance.org/release program/drm v20.htm 1; especially regarding a general description of a possible DRM architecture in document "DRM Architecture; Candidate Version 2.0 - 15 July 2004", and regarding rights for different types of digital content in document "DRM Rights Expression Language V2.0; Candidate Version 2.0 - 10 Dec 2004".

### Summary of the invention

It is an object of the present invention to improve the possibilities offered by digital rights management. This object can be achieved with a software agent as set out in claim 1, with a portable electronic device as set out in claim 7, and with a digital rights management system as set out in claim 10. Furthermore, the object of the invention can be achieved by using a method according to claim 11.

The dependent claims describe various advantageous embodiments of the invention.

### Advantages of the invention

If a software agent for digital rights management, comprising a unit adapted to manage use rights for a given digital multimedia content at a given portable electronic device, is adapted to gradually degrade the quality of the digital multimedia content upon reading or otherwise invoking the digital multimedia content, a new way to limit the use of the digital multimedia content can be achieved.

The degradation of quality of the digital multimedia content enables using the digital multimedia content for advertisement purposes without necessarily severely compromising the sales of a given digital multimedia content. In contrast, for example, if a particular digital multimedia content is sold together with a product, the client may in the beginning be given a full-quality access to the digital multimedia content. In this manner, the client initially gets an overall impression of the product. Later, he or she can repeatedly use the digital multimedia content, but since the quality gradually degrades, the owner of the copyright suffers practically no financial damage and the manufacturer or seller of the product can arrange to negotiate a less expensive royalty agreement with the copyright owner.

Furthermore, even the slightly degraded quality, together with the client's recollection of the digital multimedia content with its original quality may still suffice to make the client to purchase the digital multimedia content. The degradation of the quality may also suffice to make more persons familiar with the product in order to procure the purchase decision. For the owner of the copyright, this enables a possibility to market the digital multimedia content also over this kind of secondary marketing channel.

If the software agent further comprises a) a unit adapted to decrypt the digital multimedia content, b) a unit adapted to gradually degrade the quality of the digital multimedia content, and c) a unit adapted to encrypt the digital multimedia content after it has been degraded, the degradation can be achieved without compromising the copy protection, since it can be ensured not only that the digital multimedia content is degraded when it has been read and decrypted but also that it is again encrypted after having been degraded.

If the degradation is performed by adding noise to the digital multimedia content, by adding errors to the digital multimedia content, or by decreasing the functional scope of the digital multimedia content, different ways to effect the degradation can be achieved, each at best suitable for a given type of digital multimedia content.

If a portable electronic device comprises a processing unit, means adapted to receive encrypted digital multimedia content, and a software agent according to the invention that has been adapted, when executed in the processing unit, to reproduce the digital multimedia in a format that allows play-back, a portable electronic device that supports the quality degradation can be achieved. This offers more possibilities for utilizing DRM for promoting sales without compromising the copyright owner's position. Furthermore, it can be seen that the position of a possible licensee distributing the digital multimedia content may be improved since the digital multimedia content is not only copy-protected but also its quality degrades gradually.

If a digital rights management system for digital multimedia content comprises at least one data storage wherein use rights for given digital multimedia content are stored so that the use rights comprise a property of gradual degradation for at least some of the digital multimedia content, managing of the degrading can be carried out in a reasonable manner.

### List of Figures

In the following, the invention is described in more detail by way of examples shown in Figures 1 to 2 of the appended drawings, of which:
Figure 1 illustrates a system comprising a portable electronic device that can be used for receiving digital multimedia content from a content providing system, a content providing system, a mobile network, and a digital multimedia content distribution server. is a simplified system diagram comprising communication network, a content provision system, and a digital rights management system; and
Figure 2 is a signaling diagram showing how digital content can be ordered to a portable electronic device, how it is delivered to the portable electronic device.

Same reference numerals refer to similar structural elements throughout the Figures.

### Detailed description

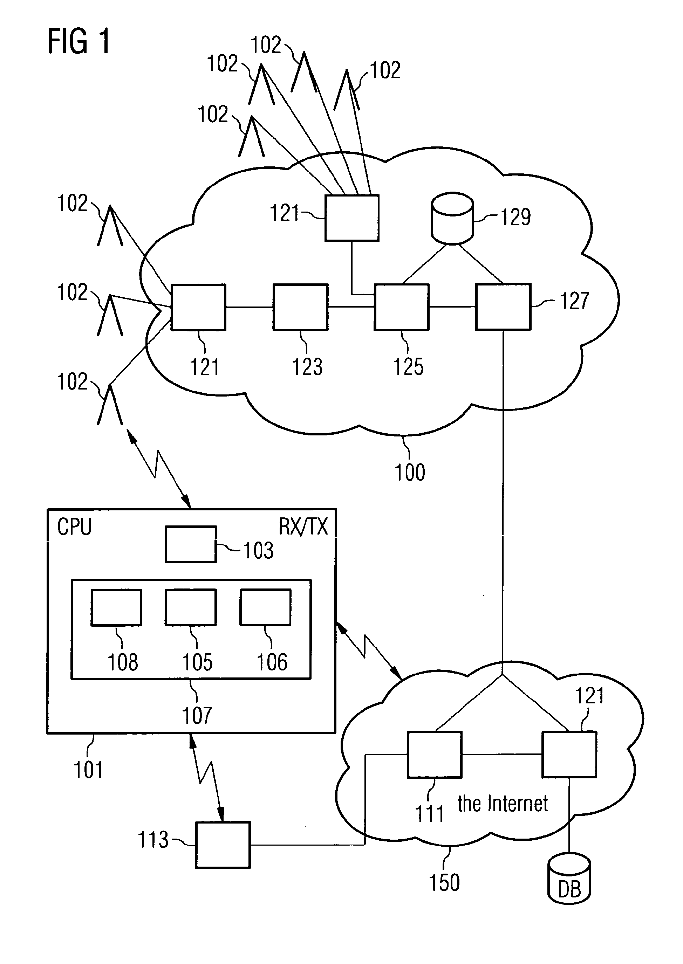

Figure 1 shows a portable electronic device 101. The portable electronic device 101 may be in connection to a content provision system 111 via the Internet 150, via a communication network 100, or via a digital multimedia content distribution server 113 such as a "multimedia booth", a vending machine for digital multimedia content. The ways in which the portable electronic device 101 may have a connection to the content provision system 111 are optional, and it is possible that for a given portable electronic device 101 only an arbitrary subset of them has been enabled whereas for another portable electronic device 101 all ways have been enabled.

The portable electronic device 101 comprises a receiving and transmitting unit RX/TX, a processing unit CPU, such as a microprocessor, and means 103 for reproducing digital multimedia content. The means 103 for reproducing digital multimedia content may comprise one or more codecs for reproducing an audio or image file, and it may further comprise means for converting the reproduced audio or image file to an aural or visual representation of the digital multimedia content.

The portable electronic device 101 further comprises a software agent 107 for digital rights management. The software agent 107 comprises a unit 106 adapted to manage use rights for multimedia content at the portable electronic device 101.

According to one aspect of the invention, the software agent 107 is adapted to gradually degrade the quality of a digital multimedia content upon reading or otherwise invoking the digital multimedia content.

The software agent 107 may comprise a unit 105 adapted to decrypt digital multimedia content, and a unit 108 adapted to gradually degrade the quality of digital multimedia content. The software agent then may further comprise a further unit for encrypting the digital multimedia content after it has been degraded, or the decryption unit 105 may be adapted to perform the encrypting.

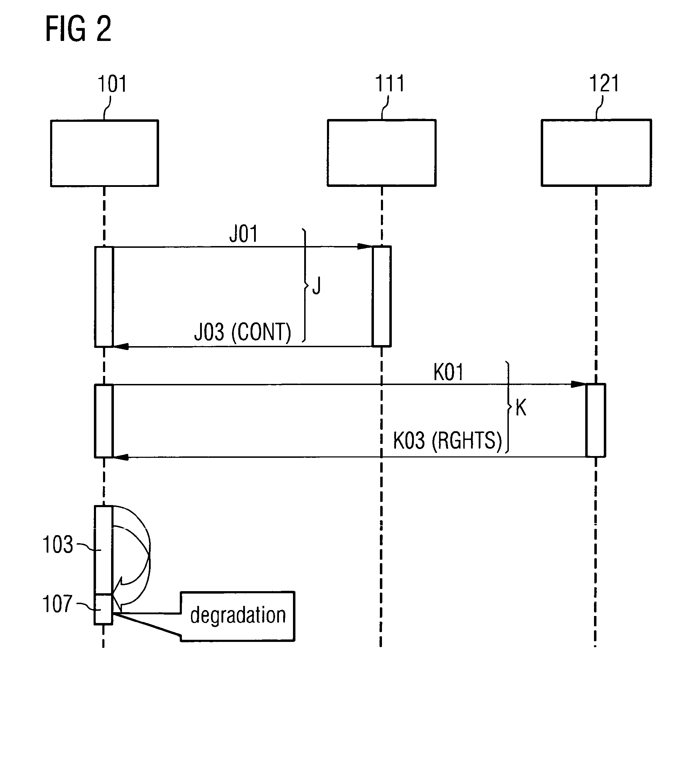

In Figure 2, a portable electronic device 101 requests a particular digital multimedia content from content provision system 111 by sending a request J01. The content provision system 111 answers by sending a service response J03 which comprises the digital multimedia content CONT the portable electronic device 101 requested. The service response J03 may be transmitted to the portable electronic device 101 over a wireless interface, such as over the communication network 100, in which case the service response J03 is passed from the content provision system 111 to a Gateway-Call Service Control Function CSCF (G-CSCF) 127.

The G-CSCF 127 passes the service response J03 then preferably through a Serving-CSCF 125 and a Proxy-CSCF 123 through the radio access network to the portable electronic device 101. The radio access network comprises in this example one or more Radio Network Controllers 121 that control Base Stations 102 that transmit the actual messages from the communication network 100 to the portable electronic device 101, and from the portable electronic device 101 to the communication network 100. The subscription data of the portable electronic device 101 for the communication network 100 is preferably stored in a Home Subscriber Server HSS 129.

If the portable electronic device 101 is adapted to subscribe or receive digital multimedia content CONT through the communication network 100, the portable electronic device 101 is then preferably a terminal of said communication network 100. Particular examples of such communication networks comprise all third generation (3G) networks, GSM and GPRS networks, CDMA networks.

After having received the digital multimedia content CONT, the software agent 107 at the portable electronic device 101 registers the digital multimedia content CONT at digital rights management system 121 by sending a registration message K01. In response to the registration message K01, the digital rights management system 121 sends to the portable electronic device 101 a rights response message K03 that comprises use rights RGHTS. Likewise for transmitting the request J01 and the service response J03, also for transmitting the registration message K01 and the rights response message K03 the communication network 100 can be used.

At the digital rights management system 121, a property of gradual degradation has been associated to digital multimedia content. This property has then been stored in a database DB. The gradual degradation may correspond to an "aging property" of the digital multimedia content.

The unit 106 in the software agent 107, upon receiving the use rights RGHTS, associates the digital multimedia content CONT with the property of gradual degradation. Whenever the digital multimedia content CONT is read or otherwise invoked, its quality is degraded. The speed of the degradation may be set at the digital rights management system 121.

The portable electronic device 101 may be a multimedia playback device. Then the receiving and transmitting unit RX/TX may be adapted to receive encrypted digital multimedia content CONT directly from a digital multimedia content distribution server 113. Directly means in this context that the reception takes place without help of the communication network 100. To effect this, the portable electronic device 101 may be in a wireless connection to the digital multimedia content distribution server 113 over an air interface. The digital multimedia content distribution server 113 may then carry out the further messaging between the content provision system 111 or the digital rights management system 121.

The Internet 150 may be used for the transmitting the requests J01, K01 and for receiving responses J03, K03. In this case the receiving and transmitting unit RX/TX is preferably adapted to be in a wireless connection to the Internet.

The kind of degradation may depend on the kind of the digital multimedia content. For audio content, noise can be added, such as in the PCM format, thus decreasing signal-to-noise ratio. For video content, bits may be altered to increase noise or to decrease the bit-to-error rate. For a game content, the functional scope of the game can be gradually decreased. This can be carried out e.g. by reducing the percentage of functions available from that of the full functional scope.

The method proposed by the OMA is extended by the possibility to define in use rights also a feature whether the quality of the digital multimedia content is degraded after reading the digital multimedia content. Depending on the digital multimedia content, the multimedia content is changed. The speed of the degradation, i.e. to what extent the degradation is provided through the use rights. The DRM agent at the mobile terminal overtakes this task.

If the digital multimedia content CONT is read or otherwisely invoked only in part, the complete digital multimedia content CONT may be degraded. Alternatively, only the part that was read may be degraded.

According to a further embodiment of the invention, the digital multimedia content CONT is transmitted to the portable electronic device 101 together with the software agent 107, i.e. software for playing back the digital multimedia content CONT. Each time after invoking the digital multimedia content CONT, by reading it, for example, the digital multimedia content CONT is degraded by using the unit 106 that may have been integrated to the software agent 107. It is now possible to copy the complete software, but the digital copying of the digital multimedia content can become very difficult.

Even though the invention was described by way of examples, the skilled person appreciates that it is not limited to them but can be generalized within the scope and spirit of the appended patent claims.

## Claims

1. A software agent (107) for digital rights management, comprising a unit (106) adapted to manage use rights for a given digital multimedia content (CONT) at a given portable electronic device (101);
**characterized in that**:
said software agent (107) is adapted to gradually degrade the quality of the digital multimedia content (CONT) upon reading or otherwise invoking the digital multimedia content (CONT).

2. A software agent (107) according to claim 1, further comprising: a) a unit (105) adapted to decrypt the digital multimedia content (CONT), b) a unit (108) adapted to gradually degrade the quality of the digital multimedia content (CONT), and c) a unit (105) adapted to encrypt the digital multimedia content (CONT) after it has been degraded.

3. A software agent (107) according to claim 1 or 2, wherein:
the degradation is performed by adding noise to the digital multimedia content (CONT).

4. A software agent (107) according to claim 1, 2 or 3, wherein: the degradation is performed by adding errors to the digital multimedia content (CONT).

5. A software agent (107) according to any one of the preceding claims, wherein: the degradation is performed by decreasing the functional scope of the digital multimedia content (CONT).

6. A software agent (107) according to any one of the preceding claims, wherein: digital multimedia content (CONT) comprises audio, video, or a game application.

7. A portable electronic device (101), comprising:
- a processing unit (CPU);
- means (RX) adapted to receive encrypted digital multimedia content (CONT); and
- a software agent (107) according to any one of the preceding claims, adapted, when executed in the processing unit (CPU), to reproduce the digital multimedia content (CONT) in a format that allows play-back.

8. A portable electronic device (101) according to claim 7, wherein: the portable electronic device (101) is a mobile terminal and the means (RX) adapted to receive encrypted digital multimedia content are adapted to receive digital multimedia content (CONT) over a communication network (100).

9. A portable electronic device (101) according to claim 7 or 8, wherein: the portable electronic device (101) is a multimedia playback device and the means (RX) adapted to receive encrypted digital multimedia content are adapted to receive digital multimedia content (CONT) directly from a digital multimedia content distribution server (113).

10. A digital rights management system (121) for digital multimedia content, comprising at least one data storage (DB) wherein use rights for given digital multimedia content are stored and **characterized in that**: the use rights comprise a property of gradual degradation for at least some of the digital multimedia content.

11. A method for managing use rights for digital multimedia content, comprising the steps of:
at a digital rights management system (121):
- defining use rights comprising a property of gradual degradation for a digital multimedia content (CONT);
- assigning a use right (RGHTS) to said digital multimedia content (CONT) for a particular portable electronic device (101) or for a particular software agent (107);
at a portable electronic device (101) or at a software agent (107):
- receiving digital multimedia content (CONT);
- receiving a use rights (RGHTS) to said digital multimedia content (CONT);
- upon reading or otherwise invoking the digital multimedia content (CONT), gradually degrading the quality of the digital multimedia content (CONT).
